Europäisches Patentamt

European Patent Office

Office européen des brevets

(19)

(11) Publication number: 0 129 336
A1

## (12) EUROPEAN PATENT APPLICATION

(21) Application number: 84303365.5

(22) Date of filing: 17.05.84

(51) Int. Cl.³: G 11 B 5/60

(30) Priority: 19.05.83 US 496013

(43) Date of publication of application:
27.12.84 Bulletin 84/52

(84) Designated Contracting States:
DE FR GB IT NL

(71) Applicant: MINNESOTA MINING AND
MANUFACTURING COMPANY
3M Center, P.O. Box 33427
St. Paul, MN 55133(US)

(72) Inventor: Knudsen, James K. c/o Minnesota Mining and
Manufacturing Company 2501 Hudson Road
St. Paul Minnesota 55133(US)

(72) Inventor: Mann, Don C. c/o Minnesota Mining and
Manufacturing Company 2501 Hudson Road
St. Paul Minnesota 55133(US)

(74) Representative: Baillie, Iain Cameron et al,
c/o Ladas & Parry Isartorplatz 5
D-8000 München 2(DE)

(54) Transducer-slider assembly having contoured air-bearing surface.

(57) Slider (10) for flying a transducer (26) closely above a
rotating recording medium is similar to those of the prior art
except that the surfaces of its air-bearing rails (12, 13, 14) are
contoured to be rounded toward the outer and trailing edges
of the rails (12, 13, 14), and preferably also toward the
leading-edge taper (18, 19, 20) of each rail (12, 13, 14). The
novel slider (10) flies a transducer (26) over a drumhead-like
recording medium at close, remarkably uniform distances.

Fig.1
PRIOR ART

Fig.3

EP 0 129 336 A1

Croydon Printing Company Ltd.

## Description

## TRANSDUCER-SLIDER ASSEMBLY HAVING
## CONTOURED AIR-BEARING SURFACE

### Technical Field

The invention concerns a transducer-slider assembly for flying the gap of the transducer in close proximity to a drumhead-like recording medium such as a magnetic recording medium.

### Background Art

Diskettes such as illustrated in U.S. patent No. 3,668,658 (Flores et al.) are in widespread use, being both inexpensive and convenient to use. Before diskettes were known, a number of patents had issued concerning magnetic recording disks made by stretching a flexible magnetic recording sheet across a rigid disk-shaped support to provide a drumhead-like recording medium. While the recording disk of a diskette has a plastic film backing which inevitably experiences dimensional changes with changes in temperature and humidity, the recording sheet of a drumhead-like recording medium has substantially the same dimensional stability as the support, and this can provide much improved dimensional stability as compared to the recording disk of any diskette now on the market.

Drumhead-like magnetic recording media are shown in U.S. patents No. 2,662,804 (Hutton); No. 3,130,110 (Schmidt); No. 3,336,583 (Comstock); No. 3,359,549 (Farrand et al.); No. 3,373,413 (Treseder); No. 3,488,646 (Sugaya); No. 3,509,274 (Kihara); No. 3,537,083 (Voth); No. 3,599,226 (Lips); No. 4,317,150 (Gruss et al.); and German Offenlegungsschrift No. 2,342,890 (Boissevain). Some of these, such as Comstock, Treseder and Sugaya contemplate contact recording. Farrand suggests that a magnetic head could fly above a drumhead-like medium, but gives no details, nor have any details been found in other prior art.

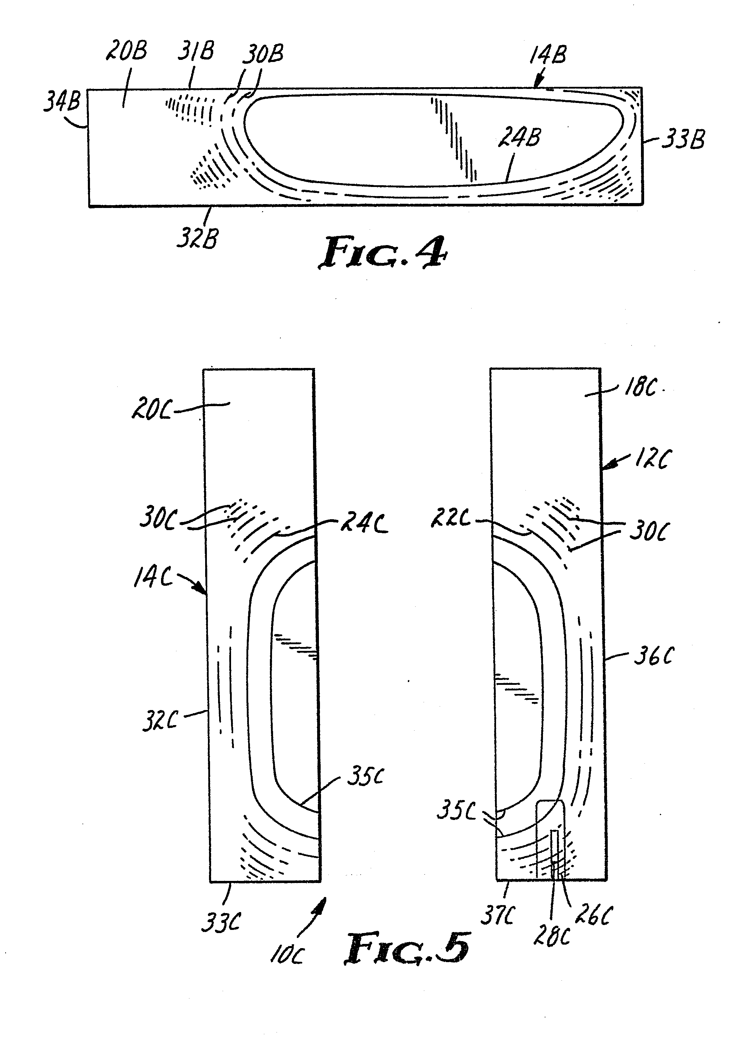

A typical flying transducer-slider assembly for use with a rigid magnetic recording disk is disclosed in U.S. Patent No. 3,823,416 (Warner). Its slider has three rectangular rails, each having a flat central portion and a leading-edge taper at which air pumped by the disk is said to be squeezed to lift the slider. A magnetic core completes the center rail to provide a transducing gap near its trailing edge. Figure 5a of the Warner patent indicates an earlier 2-rail slider. If tried with a drumhead-like magnetic recording medium, neither that 2-rail slider nor Warner's 3-rail slider would fly a transducer at a reasonably uniform height.

U.S. Patent No. 4,285,019 (Scott et al.) reports that when a 3-rail transducer-slider assembly as shown in Warner lands on a rigid recording disk, the first contact is at the transducer and its gap, thus tending to abrade the gap. Scott avoids this problem by shaping the air-bearing surfaces of the slider to be convexly curved in the longitudinal direction from the trailing edge forward, and by so supporting the assembly that only a forward portion of the air-bearing surface contacts the disk. The convexly curved surfaces may either be cylindrical (transversely flat) or generally spherical (transversely curved). In spite of purported advantages for the Scott transducer-slider assembly, the Warner assembly continues to predominate.

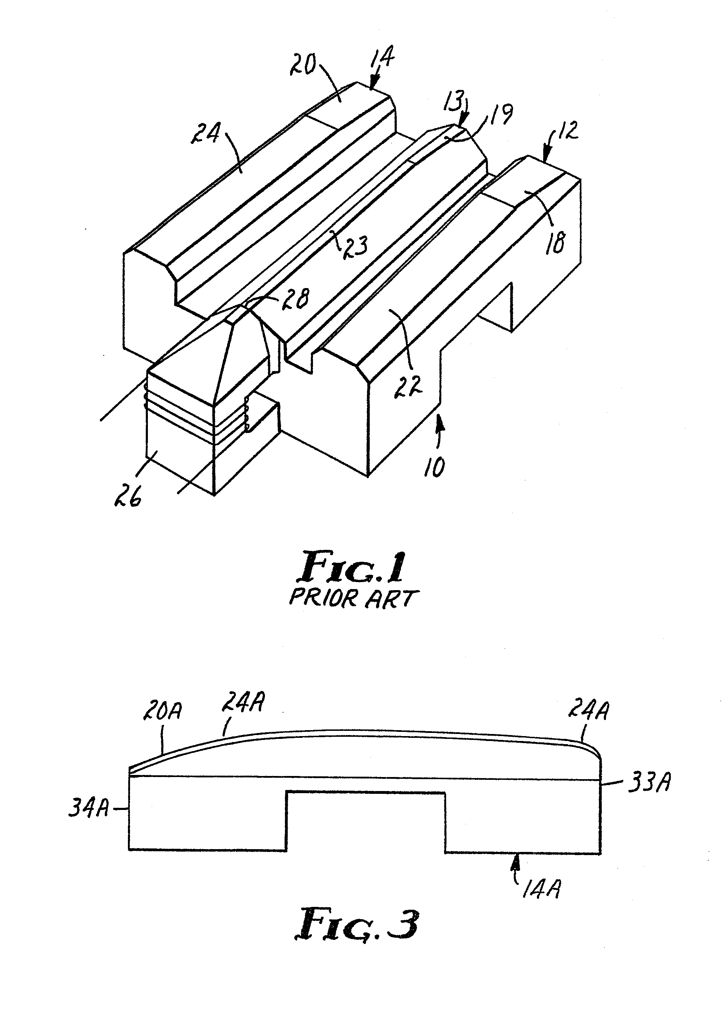

While the Scott and Warner patents concern rigid recording disks, U.S. Patent No. 4,163,267 (DeMoss) concerns diskettes or "floppy disks" and points up difficulties encountered in attempting to fly a transducer-slider assembly over such a flexible magnetic recording medium if both are floating. It calls this "a very unpleasant, somewhat imprecise, balancing act that can frequently go awry" (Col. 5, lines 16-23). DeMoss proposes a rigidly mounted transducer head over which the medium is made to fly - rather than flying the head over the medium (Col. 6, line 10). The rigidly mounted transducer of DeMoss has a "compound curvature" configuration like a small optical lens laid over the center of a larger lens (Fig. 2B). The DeMoss patent reports a head-to-medium spacing of about 12-15 microinches or 0.3 micrometer (Col. 9, line 44) which is about the same as the flying heights currently achieved in the most sophisticated rigid disk systems.

U.S. Patent No. 4,214,287 (Stromsta et al.) flies a pair of identical transducer-slider assemblies on opposite sides of a flexible magnetic recording medium such as a diskette. Each assembly includes a 2-rail slider, the air-bearing surfaces of which each have a leading-edge taper and a large-radius spherical trailing portion somewhat similar to the slider surfaces of the Scott patent.

Disclosure of Invention

The present invention concerns a slider which will fly a transducer at reasonably uniform heights over a drumhead-like recording medium. When flying the transducer at preferred gap-to-medium heights of 0.1 to 0.5 micrometer, the transducer-slider assembly may repeatedly contact the medium, but only lightly so that any wear is negligible, even when rotated at 3600 rpm, a speed typical for the rotation of rigid magnetic recording disks. Hence, the present invention should permit economical drumhead-like magnetic disk systems to be substituted for relatively expensive rigid magnetic disk systems.

As in the Warner Patent No. 3,823,416, the slider of the present invention comprises at least two spaced-apart rails, of which each outer rail has a broad air-bearing surface including a leading-edge taper and a relatively flat, broad, central portion. Unlike Warner, the broad, central portion of each of the outer rails of the novel assembly has a generally-oval perimeter, beyond which the air-bearing surface has compound curvatures of decreasing (not necessarily continuously decreasing) radii toward the outer and trailing edges of the rail. Preferably there also should be compound curvatures of decreasing radii from the generally-oval perimeter toward the leading-edge taper, and it is believed that better performance is attained when the radii decrease to the front margins of the leading-edge taper.

Within the generally-oval perimeter, the central portion of the rail may be flat or it may be rounded, with a radius of at least about 0.2 meter in the transverse direction. When the central portion of each outer rail is rounded, the transition between the central portion and the area of compound curvatures may be so gradual that the generally-oval perimeter cannot be located with precision.

When the novel slider has one central and two outer rails, the central rail preferably is narrow as in the Warner patent and like that of Warner should have an air-bearing surface which is aligned both longitudinally and transversely with the air-bearing surfaces of the outer rails.

The compound curvatures beyond the perimeter of the broad, central, relatively flat portion of each outer rail are conveniently obtained using a lapping film which is stretched across a hoop. While the hoop is rotated, the air-bearing surfaces are pressed against the lapping film until the desired curvatures are attained. The most efficient removal of material from an outer rail has been realized by first lapping with the lapping film at low tension and then at higher tension. At low tensions material is primarily removed near the edges of the rail and at higher tensions the central portion is more effectively contoured. Ideally the hoop would incorporate means for gradually increasing the tension during contouring.

When the slider includes a central rail with a transducer gap at its trailing edge, the gap preferably is protected from the lapping by a removable strip of metal-backed pressure-sensitive adhesive tape. Depending upon the thickness of the strip, it tends to minimize lapping of the outer rails at their inward edges, in which case the perimeter of each central portion, after lapping, is essentially half of an oval. A different lapping technique may be required to contour the outer rails symmetrically to provide completely oval perimeters.

As in Warner patent No. 3,823,416, the transducer gap of a 3-rail transducer-slider assembly of the present invention may be near the trailing edge of the center rail, and the air flow generated by a rotating medium tends to pitch the transducer slider assembly so that its minimum spacing from the medium is near the trailing edge of the center rail which may contact the medium. Also as in the prior art, the transducer gap of a 2-rail transducer-slider assembly of the invention may be near the trailing edge of one of those rails.

When tension in the medium is relatively low, the outer edges of the rails may fly very close to the medium. At higher tensions, the region of closest approach tends toward the centers of the outer rails. For use with a low-tension medium, the air-bearing surfaces preferably have stronger radii of curvature than when intended for use with higher-tension media. In spite of substantial differences in media tension, any transducer-slider assembly of the present invention flies the gap at close, remarkably uniform distances above the recording sheet of a drumhead-like recording medium when the medium is rotated at speeds which pump air sufficiently to fly the assembly.

Brief Description of the Drawings

In the drawing:

Fig. 1 is a schematic isometric view of a 3-rail transducer-slider assembly of the prior art.

Fig. 2 is a schematic contour drawing of the air-bearing surfaces of a transducer-slider assembly of the type shown in Fig. 1, which surfaces have been shaped to provide a preferred slider of the present invention.

Fig. 3 is a schematic side elevation of an outer rail of the slider shown in Fig. 2.

Fig. 4 is a schematic contour drawing of the air-bearing surface of a rail of another slider of the invention.

Fig. 5 is a schematic contour drawing of the air-bearing surfaces of a 2-rail transducer-slider of the invention.

Detailed Description

The transducer-slider assembly 10 shown in Fig. 1 includes three spaced-apart rails 12, 13 and 14 respectively having as air-bearing surfaces leading-edge tapers 18, 19 and 20 and flat, central portions 22, 23 and 24. A magnetic transducing head 26 has a gap 28 near the trailing edge of the center rail 13.

The air-bearing surfaces of spaced-apart rails 12A, 13A and 14A of the transducer-slider assembly of Fig. 2 are identical to those of the Fig. 1 assembly except as indicated. The outer rails 12A and 14A have relatively flat, broad, central portions within generally-oval perimeters 22A and 24A, respectively. Beyond the generally-oval perimeter 24A, the air-bearing surface of the rail 14A has been reshaped into compound curvatures of gradually decreasing radii toward its outer edge 32A, its trailing edge 33A, and its leading-edge taper 20A as indicated by progressive narrowing of contour lines 30A. The contour lines 30A also indicate gradually decreasing radii from the generally-oval perimeter 24A to the front margin 34A of the rail 14A. The air-bearing surface of the rail 12A is a mirror image of that of the rail 14A. The broad central portions of the outer rails 12A and 14A within the generally-oval perimeters 22A and 24A have been reshaped into a generally spherical shape which is exaggerated in Fig. 3 and indicated in Fig. 2 by the contour line 35A. The air-bearing surface of the narrow center rail 13A being partially reshaped, is transversely aligned with the air-bearing surfaces of the outer rails 12A and 14A.

Fig. 2 shows only the air-bearing portion 26A and gap 28A of a magnetic transducing head including the trailing edge of the center rail 13A.

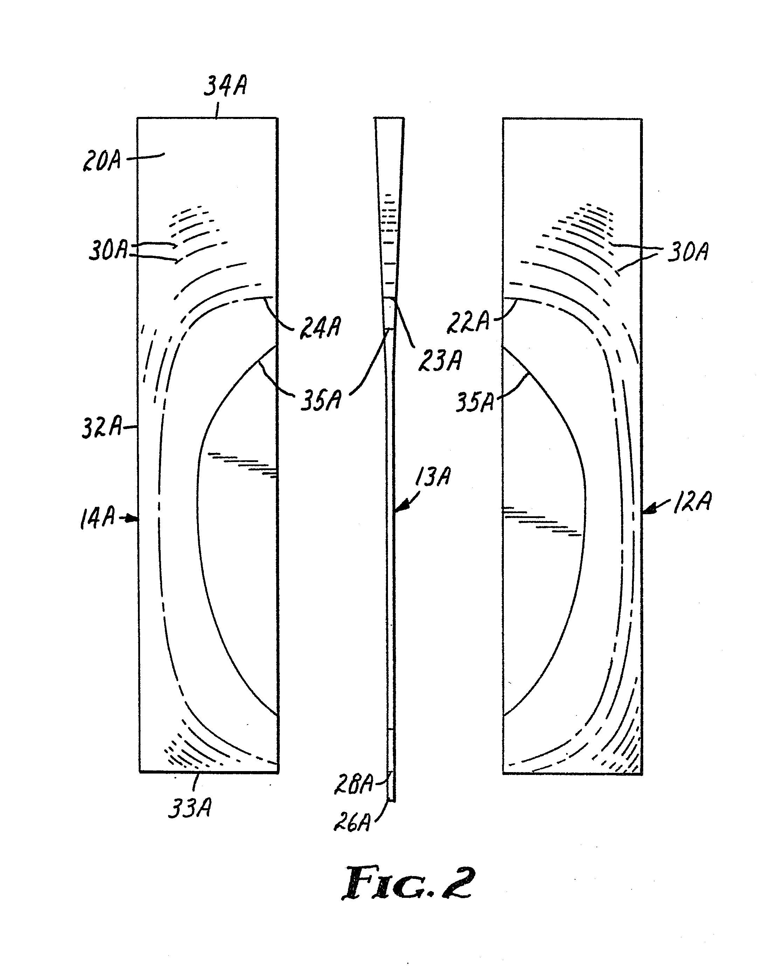

Fig. 4 shows contour lines 30B of the air-bearing surface of only the outer rail 12B of a 3-rail transducer-slider assembly constructed similarly to that of Fig. 1. The rail 14B has a flat, broad, central portion, the perimeter 24B of which is completely oval. The air-bearing surface of the rail 14B beyond the oval perimeter 24B has compound curvatures of gradually decreasing radii toward its inner edge 31B and its leading-edge taper 20B as well as toward its outer edge 32B and trailing edge 33B. The contour lines 30B also indicate that the radii continue to decrease gradually to the front margin 34B of the rail 14B.

Fig. 5 shows the contours of the air-bearing surfaces of a transducer-slider assembly 10C having only two rails 12C and 14C which have relatively flat, broad, central portions within generally-oval perimeters 22C and 24C, respectively. Beyond those generally-oval perimeters, contour lines 30C indicate that the air-bearing surfaces have compound curvatures of gradually decreasing radii toward the outer edges 32C and 36C, the trailing edges 33C and 37C, and the leading-edge tapers 20C and 18C. The broad, central portions within the perimeters 22C and 24C are generally cylindrical as indicated by contour lines 35C. The assembly 10C includes a magnetic transducing head 26C having a gap 28C near the trailing edge of the rail 12C.

## EXAMPLE 1

The air-bearing surfaces of a manganese zinc ferrite slider-transducer assembly as shown in Figure 1 had the following dimensions before being contoured:

| Outer rail width | 0.69 | mm |
|---|---|---|
| Center rail width | 0.07 | mm |
| Broad, central portion length | 4.6 | mm |
| Leading-edge taper length | 1.0 | mm |
| Angle between leading-edge taper and broad central portion | 1° | |

The air-bearing surfaces were contoured in the manner illustrated in Figures 2 and 3 except that the broad, central portions of the rails within the perimeters 22A, 23A and 24A were left flat. Prior to the contouring, the air-bearing surface of the center rail 13A was covered by a pressure-sensitive adhesive tape having a stainless steel foil backing (foil and adhesive each 25 micrometers in thickness) except that the leading-edge taper and the adjacent 1.0 mm of the flat, broad, central portion were left uncovered. The contouring was carried out using a lapping film (1/2 micron diamond) stretched across a rotating hoop (3600 rpm), initially stretched at low tension for 50 minutes and subsequently at high tension for 18 minutes. The diameter of the hoop was 12.4 cm, and the lapping was primarily performed in the region between 6 and 11 cm diameter. Approximately 25 gf (grams force) were applied during the lapping. The contouring reduced the maximum length of the central portion of each rail to 4.3 mm and the maximum width of the central portion of each outer rail to 0.63 mm. At the regions of maximum width, 0.9 to 1.0 micrometers thickness of material had been removed. At the centers of the trailing edges and at the outer trailing corners of the outer rails, about 1.6 and 6.6 micrometers thickness of material, respectively, had been removed.

The performance of the contoured slider-transducer assembly was tested using a drumhead-like magnetic recording medium which had a biaxially-oriented polyethylene terephthalate film backing 36 micrometers in thickness stretched across a rigid disk-shaped support having a diameter of about 13 cm. The magnetizable coating of the medium was acicular iron oxide particles in an organic binder (1.5 micrometers in thickness) over which had been coated 0.013 mg/cm$^2$ of butoxy ethyl stearate lubricant. While the medium was rotated at 3600 rpm, the slider-transducer assembly was positioned along a single track at a radius of 4.9 cm. The assembly was biased toward the medium under 10 gf, but the air flow generated by the rotating disk was sufficient to fly the magnetic gap about 0.13 micrometer above the face of the medium, as determined by electronic tests. The trailing edge of the center rail may have been barely contacting the medium, as indicated by light polish marks after flying for 1500 hours along that single track. However, the medium had not been damaged, as indicated by no dropouts when recorded at 5 megabits per second at 3600 rpm and then played back.

In order to study the flying height of the slider-transducer assembly of this Example, a transparent polyethylene terephthalate film was stretched across a rigid disk-shaped support having a diameter of about 13 cm. While that support was rotated at 3600 rpm with the assembly positioned at a radius of 5.2 cm, the height above the film of the trailing edge of the center rail was 0.07 micrometer and of the transducer gap was 0.10 micrometer. The closest spacing between the outer rails and the film was 0.2 micrometer along the generally-oval perimeter of the outboard outer rail adjacent its outer edge. The closest spacing between the inboard outer rail and the film was 0.3 micrometer along the generally-oval perimeter adjacent its outer edge. Light polish marks were made by the trailing edge of the center rail and by the outer edge of the outboard outer rail.

## EXAMPLE 2

A manganese zinc ferrite slider-transducer of substantially the same dimensions as that in Example 1 was contoured using essentially the same method as in Example 1, thus leaving flat, half-oval central portions within the perimeters 22A and 24A. The maximum length and width of the central portion of each outer rail were 4.5 and 0.65 mm, respectively. The perimeters 22A and 24A were 0.33 mm from the outer trailing corner of each outer rail, measured along a line at a 45° angle to the trailing edge. The radii of curvature along that line were approximately 2.2 cm at a point 0.26 mm from the corner and 0.8 cm at a point 0.13 mm from the corner. At the corner a thickness of 8.2 micrometers had been removed.

The radii of curvature were also measured along a line toward the broad central portion of an outer rail from the original intersection of the outer edge, the central portion, and the leading-edge taper. The line extended in the direction of steepest ascent from the original intersection at a 65° angle to the outer edge. The radii were 4.7 cm at a point 0.25 mm from the original intersection and 1.7 cm at a point 0.08 mm from the original intersection. Beyond 0.32 mm the central portion was flat. At the original intersection a thickness of 4.9 micrometers had been removed.

During the lapping process, it was observed that the regions of large radius of curvature had been formed during high-tension lapping, and the regions of small radius of curvature had been formed during low-tension lapping.


### EXAMPLE 3

A manganese zinc ferrite slider-transducer of substantially the same dimensions as that in Example 1 was contoured using essentially the same method as in Example 1, except that the contouring process was allowed to continue such that a greater amount of the central portion was removed. The contouring was similar to that of Figure 4 except that the perimeter 24B intersected the inner edge 31B at points 3.4 mm apart. The maximum length of the broad, flat central portion was 3.6 mm measured along a line 0.25 mm from the edge 31B. Along that line, radii of curvature were aproximately infinite, 14, 15 and 0.2 cm at points 0.49, 0.33, 0.13 and 0.017 mm, respectively, from the trailing edge. It is believed that a more gradual change in radii of curvature would have been beneficial.

The radii of curvature were also measured along a transverse line from the outer edge of an outer rail at the position where the central portion had its maximum width. The radii of curvature were 1.3 and 0.5 cm at points 0.15 and 0.05 mm, respectively, from the outer edge.

At the intersection of said transverse line and the outer edge, a thickness of 2.2 micrometers had been removed. At a point on the trailing edge 0.25 mm from the inner edge, a thickness of 1.9 micrometers had been removed.

## Claims

1. A slider (10) for flying a transducer (26) over a drumhead-like recording medium comprising at least two spaced-apart rails (12-14), of which each outer rail (12,14) has a broad air-bearing surface including a leading-edge taper (18,20) and a relatively-flat, broad, central portion (22,24), and characterized in that said central portion has a generally-oval perimeter (22A,24A) beyond which the air-bearing surface has compound curvatures of decreasing radii toward the outer (32A) and trailing edges (33A) of the rail (12A,14A).

2. A slider (10) as defined in claim 1 further characterized in that the central portion of each of the outer rails (12A,14A) is flat.

3. A slider (10) as defined in claim 1 further characterized in that the central portion of each of the outer rails (12A,14A) is generally spherical or cylindrical, with a radius of at least 0.2 meter in the transverse direction.

4. A slider (10) as defined in claim 1 further characterized in that the air-bearing surface of each of the outer rails (12A, 14A) beyond the central portion also has compound curvatures of decreasing radii (30B) toward the inner edge (31B) of the rail (14B) so that the perimeter (24B) of the central portion is completely oval.

5. A slider (10) as defined in claim 1 further characterized in that the inward portion of said perimeter (22A,24A) substantially coincides with the inward edge of the rail (12A,14A) so that the perimeter (35A) is essentially half of an oval.

0129336

6. A slider (10) as defined in claim 5 further characterized by a relatively narrow center rail (13A) which is spaced apart from each of said outer rails (12A,14A) and has an air-bearing surface which is aligned both longitudinally and transversely with the surfaces of said two outer rails (12A,14A).

7. A slider (10) as defined in claim 1 further characterized in that the air-bearing surface beyond the generally-oval perimeter (35A) of each of the outer rails (12A,14A) has compound curvatures of decreasing radii (30A) toward the leading-edge taper (20A).

8. A slider (10) as defined in claim 7 further characterized in that the radii (30A) continue to decrease to the front margin (34A) of the leading-edge taper (20A) of each rail (12A,14A).

9. A transducer-slider assembly (10C) as defined in claim 6 further characterized by a transducer (26A) near the trailing edge of the center rail (13A).

10. A transducer-slider assembly (10C) as defined in claim 9 further characterized in that the transducer (26A) is a magnetic head.

11. A slider (10) as defined in claim 1 further characterized in that said two outer rails (12A,14A) are adjacent.

12. A transducer-slider assembly (10C) as defined in claim 11 further characterized by a transducer (26C) near the trailing edge (37C) of one of said two rails (12C,14C).

13. A transducer-slider assembly (10C) as defined in claim 12 further characterized in that the transducer (26C) is a magnetic head.

**FIG.1**
PRIOR ART

**FIG.3**

FIG.2

0129336

3 / 3

FIG.4

FIG.5

## EUROPEAN SEARCH REPORT

**European Patent Office**

## DOCUMENTS CONSIDERED TO BE RELEVANT

| Category | Citation of document with indication. where appropriate, of relevant passages | Relevant to claim | CLASSIFICATION OF THE APPLICATION (Int. Cl ³) |
|---|---|---|---|
| A | Patent Abstracts of Japan vol. 3, no. 149, 8 December 1979 & JP-A-54-127310 | 1 | G 11 B    5/60 |
| A | Patent Abstracts of Japan vol. 4, no. 39, 28 March 1980 page 127P4 & JP-A-55-12542 | 1 | |
| A | Patent Abstracts of Japan vol. 3, no. 86, 24 July 1979 page 135E125 & JP-A-54-65516 | 1 | |
| A | EP-A-0 072 389  (IBM) * Abstract; figure 1 * | 1 | |
| A | EP-A-0 007 548  (BURROUGHS CORP.) * Abstract; figure 3 * | | **TECHNICAL FIELDS SEARCHED (Int. Cl. ³)** |
| D,A | US-A-3 823 416  (M.W. WARNER) | | G 11 B    5/60  G 11 B   17/32  G 11 B   21/20 |
| D,A | US-A-4 285 019  (J.C. SCOTT et al.) | | |
| D,A | US-A-4 163 267  (D. DeMOSS) | | |

The present search report has been drawn up for all claims

| Place of search | Date of completion of the search | Examiner |
|---|---|---|
| BERLIN | 16-08-1974 | ROGNONI M.G.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82